# EUROPEAN PATENT APPLICATION

(11) **EP 4 044 029 A1**
(43) Date of publication of application: **17.08.2022**
(21) Application number: 20887101.2
(22) Date of filing: 04.11.2020
(51) Int. Cl.: G06F 9/4401

(54) **DAUGHTER CARD INITIALIZATION METHOD, ELECTRONIC APPARATUS, AND STORAGE MEDIUM**

(30) Priority: 15.11.2019 CN 201911118858
(71) Applicant: ZTE Corporation, Shenzhen, Guangdong 518057 (CN)
(72) Inventor: ZHU, Yanling, Shenzhen, Guangdong 518057 (CN)
(74) Representative: Petraz, Gilberto Luigi
(86) International application number: PCT/CN2020/126511
(87) International publication number: WO 2021/093654

(57) **Abstract**

Embodiments of the present application relate to the technical field of communications, and disclose a daughter card initialization method, an electronic apparatus, and a storage medium. The daughter card initialization method comprises: acquiring a configuration file of a target daughter card, wherein the configuration file is pre-configured and comprises parameter information required for an initialization process of the target daughter card; parsing the configuration file, and acquiring, from the configuration file, initialization parameter information of the target daughter card; and initializing the target daughter card according to a general daughter card initialization process and the initialization parameter information.

## Description

The disclosure claims the priority of Chinese patent application No. 201911118858.7, entitled "Daughter Card Initialization Method, Electronic Apparatus, and Storage Medium" and filed on November 15, 2019, the entirety of which is incorporated herein by reference.

### Field of the Invention

Embodiments of the disclosure relate to the technical field of communications, and in particular, to a daughter card initialization method, an electronic apparatus, and a storage medium.

### Background of the Invention

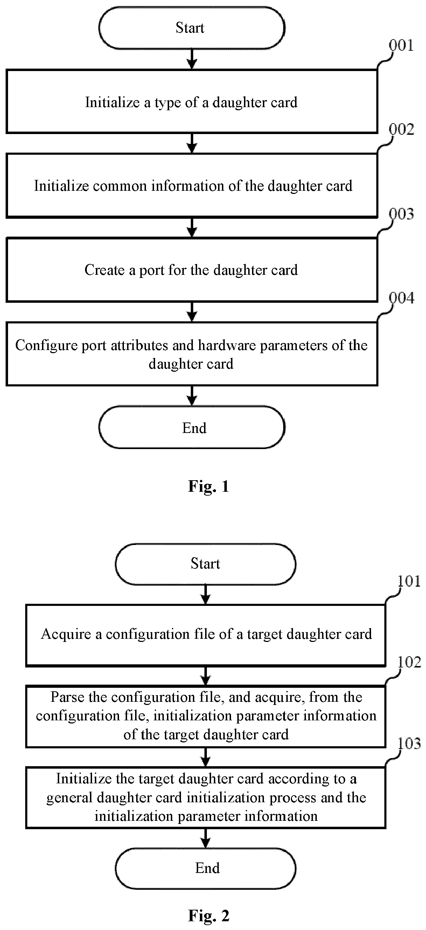

With the development of 5G technology, products of high-end routers and switches have increasing demands for the type of interface daughter cards and bandwidth. At present, each time when an interface daughter card is newly added, it is required to initialize the daughter card so as make the newly added card usable. As shown in Fig. 1, a current daughter card initialization process mainly includes initializing a type of a daughter card, initializing common information of the daughter card, creating a port for the daughter card, and configuring port attributes and hardware parameters of the daughter card.

However, during application of some daughter card initialization processes, each time when an interface daughter card is newly added, even if the newly added interface daughter card does not have a newly added interface type, it is required to newly add codes to support the newly added interface daughter card in the daughter card initialization process, and the daughter card can only be supported in the next commercially used version. In this way, the development cycle is long, and it is difficult to meet the market demands.

### Summary of the Invention

According to embodiments of the disclosure, it is provided a daughter card initialization method, an electronic apparatus, and a storage medium.

In order to solve the above problem, an embodiment of the disclosure provides a daughter card initialization method, including: acquiring a configuration file of a target daughter card, the configuration file being pre-configured and including parameter information required for an initialization process of the target daughter card; parsing the configuration file, and acquiring, from the configuration file, initialization parameter information of the target daughter card; and initializing the target daughter card according to a general daughter card initialization process and the initialization parameter information.

An embodiment of the disclosure further provides an electronic apparatus, including at least one processor and a memory communicatively connected to the at least one processor. The memory stores an instruction executable by the at least one processor, and the instruction is executed by the at least one processor so as to enable the at least one processor to implement the above daughter card initialization method.

An embodiment of the disclosure further provides a storage medium, which stores a computer program, the computer program, when executed by a processor, implementing the above daughter card initialization method.

### Brief Description of the Drawings

One or more embodiments are exemplarily described with reference to corresponding drawings, and the exemplary description does not constitute any limitation on the embodiments. Elements with the same reference numeral in the drawings indicate similar elements unless particularly stated, and the drawings do not constitute any limitation on the proportion.
Fig. 1 is a flowchart of a daughter card initialization method in existing technologies;
Fig. 2 is a flowchart of a daughter card initialization method according to a first embodiment of the disclosure;
Fig. 3 is a schematic diagram of a principle of daughter card initialization according to the first embodiment of the disclosure;
Fig. 4 is a flowchart of a daughter card initialization method according to a second embodiment of the disclosure;
Fig. 5 is a schematic diagram of a principle of daughter card initialization according to the second embodiment of the disclosure;
Fig. 6 is a flowchart of a daughter card initialization method according to a third embodiment of the disclosure; and
Fig. 7 is a schematic diagram of a structure of an electronic apparatus according to a fourth embodiment of the disclosure.

### Detailed Description of the Embodiments

In order to make the objective, solutions, and advantages of embodiments of the disclosure clearer, the respective embodiments of the disclosure are elaborated below with reference to the drawings. Those of ordinary skills in the art may understand that many technical details are put forward in order to make the reader better understand the disclosure. However, even without these technical details and based on various changes and modifications on the following respective embodiments, solutions of the disclosure can also be implemented. Division of the following respective embodiments is for the convenience of description and should not constitute any definition on specific implementation manners of the disclosure, and respective embodiments may be combined and referred with each other under the premise of no contradiction.

A first embodiment of the disclosure relates to a daughter card initialization method. In the embodiment, a configuration file of a target daughter card is acquired; the configuration file is pre-configured and includes parameter information required for an initialization process of the target daughter card; the configuration file is parsed, and initialization parameter information of the target daughter card is acquired from the configuration file; and the target daughter card is initialized according to a general daughter card initialization process and the initialization parameter information. The daughter card is initialized by using such a configuration file including daughter card initialization parameter information and according to a general initialization process, so that each time when a different daughter card is newly added, initialization of the daughter card can be realized by only adding or modifying the configuration file without the need of newly adding or modifying initialization process codes, which will reduce the complexity of daughter card initialization. Implementation of the daughter card initialization method in the embodiment are described in details below, and the following descriptions are merely implementation details provided for better understanding and are not essential for implementing the solution.

The daughter card initialization method in the embodiment is shown in Fig. 2, and may include the following steps.

At step 101, a configuration file of a target daughter card is acquired. The configuration file is pre-configured and includes parameter information required for an initialization process of the target daughter card.

In an embodiment, the target daughter card is a newly mounted daughter card, and it is required to initialize the newly mounted target daughter card so that it can be used normally. All initialization parameters required for the initialization process of the target daughter card, including a type of the target daughter card, the number, type, and attributes of an interface of the target daughter card, other hardware configuration parameters of the target daughter card, and the like, are configured and described in the configuration file corresponding to the target daughter card in advance. It should be noted that, initialization parameters in the configuration file are provided for being used by the general initialization process, and need to correspond to a parameter format that can be acquired and identified by the initialization process. It should be noted that, the configuration file may be pre-compiled in an XML file format or an EXCEL file format, and may also be compiled in other readable formats according to general initialization process codes. The disclosure does not make any limitation on this.

A module in charge of the daughter card initialization in a system may include a daughter card version management module. When a daughter card is newly added, the daughter card version management module downloads the pre-compiled configuration file of the daughter card locally to the module for the daughter card initialization.

At step 102, the configuration file is parsed, and initialization parameter information of the target daughter card is acquired from the configuration file.

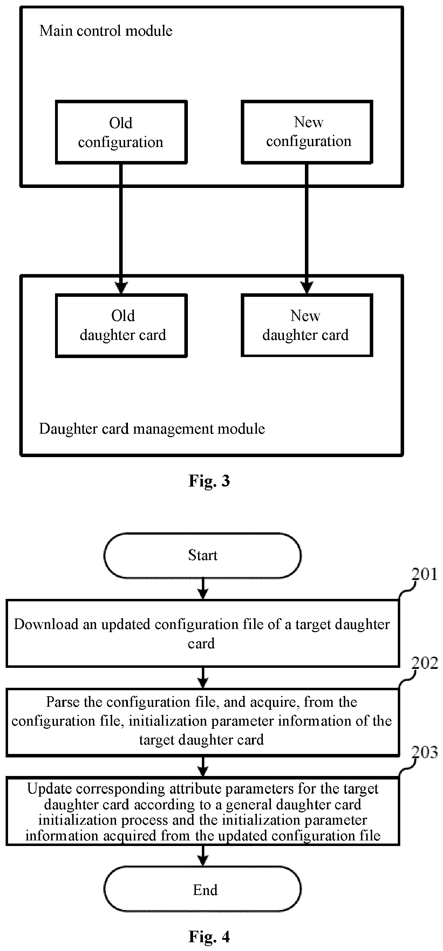

In an example, the daughter card initialization method in the embodiment is applied to a router which includes a main control module and a daughter card management module communicatively connected to the main control module. As shown in Fig. 3, a configuration file corresponding to a new daughter card is downloaded by the main control module, and a new configuration is applied to the new daughter card of the router correspondingly, while an old configuration acquired previously by the main control module is applied to an old daughter card of the router.

In an embodiment, the daughter card management module may further include a daughter card initialization sub-module. The daughter card initialization sub-module parses the initialization parameter information, configured or described in advance, in the configuration file, and save parsed initialization parameter information to the daughter card initialization sub-module according to a slot number of the target daughter card.

At step 103, the target daughter card is initialized according to a general daughter card initialization process and the initialization parameter information.

In an embodiment, the initialization parameter information includes any one or any combination of a type of a daughter card interface, performance of the daughter card interface, and hardware configuration parameters. The general daughter card initialization process includes: creating a corresponding port for the daughter card according to the type of the daughter card interface; setting corresponding attributes for the port created according to the performance of the daughter card interface; and setting hardware configuration parameters for the daughter card according to the hardware configuration parameters.

When the target daughter card is initialized, a port is created for the target daughter card according to a general sub-process of creating the port for the daughter card based on the type and the number of the interface corresponding to the target daughter card acquired by parsing the configuration file, and then corresponding attributes are set for the port created according to a general sub-process of setting the attributes of the port for the daughter card. In an embodiment, if it is required to set other attributes of the target daughter card, the corresponding daughter card initialization module may perform setting according to the general daughter card initialization process. The embodiment does not make any limitation on the range of attributes of the daughter card required for setting. The attributes of the daughter card required for setting not only include port attributes but also include other hardware configurations.

In the first embodiment, the daughter card is initialized by using the configuration file including daughter card initialization parameter information and according to the general initialization process, so that each time when a different daughter card is newly added, initialization of the daughter card can be realized by only adding or modifying the configuration file without the need of newly adding or modifying initialization process codes, which may reduce the complexity of daughter card initialization.

A second embodiment of the disclosure relates to a daughter card initialization method. The second embodiment is similar to the first embodiment, except that the first embodiment is applied to a scene in which a daughter card is newly added, while the second embodiment of the disclosure is applied to a scene in which no daughter card is newly added and only modification of hardware configurations of the daughter card is performed. Those skilled in the art may understand that, for the scene in which no daughter card is newly added and only modification of hardware configurations of the daughter card is performed, it is only needed to modify and update an existing configuration file so as to reinitialize the daughter card.

The daughter card initialization method in the embodiment is shown in Fig. 4, and may include the following steps.

At step 201, an updated configuration file of a target daughter card is downloaded. The configuration file is pre-configured and includes parameter information required for an initialization process of the target daughter card.

In an example, the daughter card initialization method in the embodiment is applied to a router which includes a main control module and a daughter card management module communicatively connected to the main control module. The main control module receives a request for updating the configuration file, and notifies the daughter card management module to download an updated configuration file.

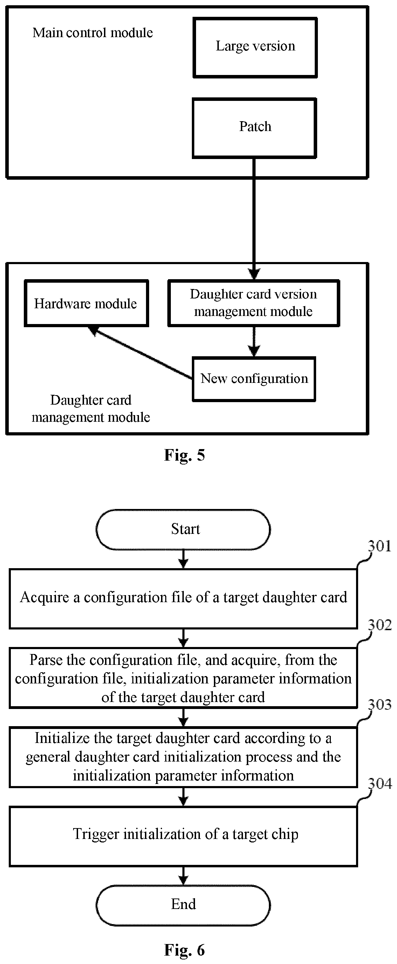

In an embodiment, in an external field environment, when updating of a large-version application file in the main control module leads to changes in some hardware parameters so that the target daughter card which should be used normally becomes incompatible, if modification is performed on the large-version application file in the main control module, recorded service files may possibly be lost after the system is restarted. At this time, modifying the large-version application file will cause unnecessary loss, and the process will be complicated. Likewise, if modification is performed on a daughter card initialization process file, reinitializing will also waste a great amount of time and labour costs. At this time, by utilizing the daughter card initialization method in the embodiment, a configuration file of the target daughter card is modified in advance to modify incompatible hardware configuration parameters to be compatible hardware configuration parameters, as shown in Fig. 5, and the modified configuration file is packaged as a patch. When the large-version application file is incompatible with the target daughter card, the main control module may receive the request for updating the configuration file. The daughter card management module may further include a daughter card version management module, and the daughter card version management module may download an updated version of the configuration file of the target daughter card.

At step 202, the configuration file is parsed, and initialization parameter information of the target daughter card is acquired from the configuration file.

In an embodiment, the daughter card management module parses the updated configuration file, replaces old-version initialization parameter information with updated initialization parameter information, and performs saving according to a slot number corresponding to the target daughter card.

In an embodiment, the daughter card management module includes multiple daughter card initialization sub-modules, and the multiple daughter card initialization sub-modules each parse the updated initialization parameter information in the configuration file, and perform updating and saving according to the slot number corresponding to the target daughter card.

At step 203, corresponding attribute parameters are updated for the target daughter card according to a general daughter card initialization process and the initialization parameter information acquired from the updated configuration file.

In an embodiment, the updated configuration file includes updated hardware configuration parameters of the target daughter card. The corresponding attribute parameters being updated for the target daughter card according to the general daughter card initialization process and the initialization parameter information acquired from the updated configuration file includes: modifying hardware configuration parameters according to the general daughter card initialization process and the updated hardware configuration parameters of the target daughter card.

In addition to a procedure of creating a port of the daughter card port and a procedure of setting attributes of the port, the general daughter card initialization process may further include setting of other hardware configuration parameters of the daughter card, for example, chip configuration parameters corresponding to the target daughter card. By using a general daughter card hardware configuration initialization process and the updated hardware configuration parameters, the hardware configuration parameters of the target daughter card are initialized, and incompatible hardware configuration parameters are modified.

In the second embodiment, the hardware configuration parameters in the configuration file are updated, and the attribute parameters corresponding to the daughter card, especially the updated hardware configuration parameters, are set according to the general initialization process, so that in the external field environment, when some hardware configurations in a newly set large-version application are incompatible with the daughter card, the daughter card may be reinitialized by modifying the configuration file so as to modify the hardware configuration parameters. In this way, neither the daughter card initialization process file nor the large-version application file needs to be modified, which may avoid service loss caused by modifying the large-version application file and restarting, so that simple and quick setting of the hardware parameters of the daughter card can be realized.

A third embodiment of the disclosure relates to a daughter card initialization method. The third embodiment is similar to the first embodiment, except that in the third embodiment, after setting corresponding attribute parameters of the daughter card is completed, an initialization process of a chip is triggered and further performed.

The daughter card initialization method in the embodiment is shown in Fig. 6, and may include the following steps.

At step 301, a configuration file of a target daughter card is acquired. The configuration file is pre-configured and includes parameter information required for an initialization process of the target daughter card.

At step 302, the configuration file is parsed, and initialization parameter information of the target daughter card is acquired from the configuration file.

At step 303, the target daughter card is initialized according to a general daughter card initialization process and the initialization parameter information.

Steps 301 to 303 in the third embodiment are similar to steps 101 to 103 in the first embodiment, and details are not repeated herein. Differences are described below.

At step 304, initialization of a target chip is triggered.

In an embodiment, the target chip corresponds to a configuration file, and the configuration file corresponding to the target chip includes parameter information required for an initialization process of the target chip. The initialization of the target chip includes: initializing the target chip according to a general chip initialization process and chip initialization parameter information included in the configuration file corresponding to the target chip.

In an example, in a circumstance where the newly added target daughter card is incompatible with chip configuration parameters in the large-version application file and the general daughter card initialization process does not include a procedure of initializing configuration parameters of the chip, after setting of attribute parameters in the daughter card management module is completed, the chip initialization process may be triggered, so as to modify the configuration parameters of the chip. For the chip initialization method, reference can be made to the daughter card initialization methods in the first and second embodiments. By means of a configuration file in which common information of initiation of the target chip is pre-configured, the target chip is initialized according to the general chip initialization process and the initialization parameter information in the configuration file.

In an embodiment, the target chip includes a forwarding chip and a switching chip. Triggering the initialization of the target chip includes procedures of: triggering initialization of the forwarding chip; and triggering initialization of the switching chip after the initialization of the forwarding chip is completed.

In an embodiment, when there are multiple types of chips or configuration parameters of multiple chips are incompatible with the newly added target daughter card, these multiple chips may be initialized respectively by means of configuration files. In this way, each time when the initialization fails, the chip configured incorrectly can be found out directly, and parameters in the configuration file of the chip can be modified directly in a targeted manner so as to quickly solve the problem.

In the third embodiment, the initialization of the chip is triggered finally in the initialization process of the daughter card. In an embodiment, initialization of other hardware may also be triggered. The initialization of other hardware may also be performed by means of configuration files, or initialization processes of multiple kinds of hardware may be performed at the same time. The disclosure does not make any limitation on this.

In the third embodiment, the daughter card is initialized by using the configuration file including daughter card initialization parameter information and according to the general initialization process, and after setting of attribute parameters in the daughter card management module is completed, attribute parameters of the chip is set by using the configuration file including chip initialization parameter information and according to the general chip initialization process. In this way, each time when a different daughter card is newly added, the initialization of the daughter card can be realized by adding or modifying the configuration file only without the need of newly adding or modifying initialization process codes, which will reduce the complexity of daughter card initialization, and the attribute parameters of the chip corresponding to the daughter card can also be set at the same time.

The above steps of various methods are divided only for clear description. When a method is implemented, some steps may be combined into one step, or a step may be divided into multiple steps. As long as the same logic relationship is included, the division manners both fall into the protection scope of the disclosure. Adding an inessential modification or introducing an inessential design into an algorithm or a process without changing the core design of the algorithm or the process falls into the protection scope of the disclosure.

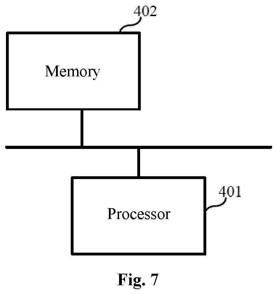

A fourth embodiment of the disclosure relates to an electronic apparatus, as shown in Fig. 7. The electronic apparatus includes at least one processor 401 and a memory 402 communicatively connected to the at least one processor 401. The memory 402 stores an instruction executable by the at least one processor 401, and the instruction is executed by the at least one processor 401 so as to enable the at least one processor 401 to implement the above daughter card initialization method according to any of the first to third embodiments.

The memory 402 and the processor 401 are connected by a bus. The bus may include any number of interconnected buses and bridges, and connect various circuits of one or more processors 401 and the memory 402. The bus may also connect various other circuits such as a peripheral device, a stabilizer, and a power management circuit. These are known in the art, and are not further described herein. A bus interface is provided between the bus and a transceiver. The transceiver may be an element and may also be multiple elements, for example multiple receivers and transmitters, which may provide a unit for communicating with various other devices over a transmission medium. Data processed by the processor 401 is transmitted over a wireless medium, and further an antenna receives the data and transmits the data to the processor 401.

The processor 401 is in charge of managing the bus and general processing, and may also provide various functions, including timing, the peripheral interface, voltage adjustment, power source management, and other control functions. The memory 402 may be used to store data used by the processor 401 when performing operations.

A fifth embodiment of the disclosure relates to a computer readable storage medium, which stores a computer program. The computer program, when executed by a processor, implements the above embodiments of the daughter card initialization method.

In the embodiment, a configuration file of a target daughter card is acquired and parsed; parameter information required for initialization of the target daughter card is required from the configuration file; corresponding attribute parameters corresponding to the target card are set according to a general daughter card initialization process and the initialization parameter information. The daughter card is initialized by using the configuration file including daughter card initialization parameter information and according to a general initialization process, so that each time when a different daughter card is newly added, initialization of the daughter card can be realized by only adding or modifying the configuration file without the need of newly adding or modifying initialization process codes, which reduces the complexity of daughter card initialization.

Further, the initialization parameter information includes any one or any combination of a type of a daughter card interface, performance of the daughter card interface, and hardware configuration parameters. The general daughter card initialization process includes: creating a corresponding port for the daughter card according to the type of the daughter card interface; setting corresponding attributes for the port created according to the performance of the daughter card interface; and setting hardware configuration parameters for the daughter card according to the hardware configuration parameters. The target daughter card is initialized according to a general port creating procedure and an attribute configuration procedure as well as interface parameters of the daughter card, so that port creating and attribute configuring of the newly added daughter card can be realized without modifying initialization process codes and that initialization steps are simple and quick.

Further, acquiring the configuration file of the target daughter card includes: downloading an updated configuration file of the target daughter card. Initializing the target daughter card according to the general daughter card initialization process and the initialization parameter information includes: updating corresponding attribute parameters for the target daughter card according to the general daughter card initialization process and the initialization parameter information acquired from the updated configuration file. When no daughter card is newly added and it is only needed to modify configuration parameters of the daughter card, quick initialization of the daughter card can be realized by directly modifying the configuration file without the need of modifying initialization process codes.

Further, the updated configuration file includes updated hardware configuration parameters of the target daughter card. Updating corresponding attribute parameters for the target daughter card according to the general daughter card initialization process and the initialization parameter information acquired from the updated configuration file include: modifying the hardware configuration parameters according to the general daughter card initialization process and the updated hardware configuration parameters of the target daughter card. In the external field environment, when some hardware configurations in a newly set large-version application are incompatible with the daughter card, the initialization process of the daughter card may be performed by modifying the configuration file so as to modify the hardware parameters. In this way, neither the daughter card initialization process file nor the large-version application file needs to be modified, which may avoid service loss caused by modifying the large-version application file and restarting, so that simple and quick setting of the hardware parameters of the daughter card can be realized.

Further, the daughter card initialization method in the embodiment is applied to a router which includes a main control module and a daughter card management module communicatively connected to the main control module. Downloading the updated configuration file of the target daughter card includes that the main control module receives a request for updating the configuration file and notifies the daughter card management module of downloading the updated configuration file. Parsing the configuration file and acquiring the initialization parameter information of the target daughter card includes that the daughter card management module parses the updated configuration file, replaces old-version initialization parameter information with updated initialization parameter information, and performs saving according to a slot number corresponding to the target daughter card. When the attribute parameters of the daughter card are incompatible with the target daughter card, the main control module receives a notification to automatically trigger the initialization process of the daughter card, so that the initialization of the daughter card is automated and that using of the daughter card can be ensured.

Further, after initializing the target daughter card according to the general daughter card initialization process and the initialization parameter information, the method further includes triggering initialization of a target chip. The target chip corresponds to a configuration file, and the configuration file corresponding to the target chip includes parameter information required for an initialization process of the target chip. The initialization of the target chip includes: initializing the target chip according to a general chip initialization process and the chip initialization parameter information included in the configuration file corresponding to the target chip. For chip parameter configuring of the daughter card, the same method may be used to initialize the chip, so as to achieve the simple and quick chip initialization process.

Further, the target chip includes a forwarding chip and a switching chip. Triggering the initialization of the target chip includes: triggering initialization of the forwarding chip; and triggering an initialization process of the switching chip after the initialization of the forwarding chip is completed. Different types of chips are initialized one by one according to a certain sequence. In this way, when the initialization fails, the chip configured incorrectly can be found out directly, and parameters in the configuration file of the chip can be modified directly in a targeted manner so as to quickly solve the problem.

Further, the configuration file is pre-compiled in an XML file format or an EXCEL file format. The format of the configuration file is not limited, and there may be various formats, so that embodiments of the disclosure can be implemented flexibly.

It should be noted that, those skilled in the art should understand that, all or some steps of the above methods in the embodiments may be completed by using a program to instruct relevant hardware, the program being stored in a storage medium and including several instructions to enable a device (which may be a singlechip, a chip, and the like) or a processor to carry out all or some steps of the methods in various embodiments. The aforesaid storage medium includes various mediums that may store program codes, such as a USB flash disk, a mobile hard disk drive, a read-only memory (ROM), a random access memory (RAM), a diskette or an optical disk.

Those of ordinary skills in the art may understand that, the above various embodiments are specific embodiments for implementing the disclosure. However, in actual application, various changes can be made in forms and details without departing from the spirit and the scope of the disclosure.

## Claims

1. A daughter card initialization method, comprising:
acquiring a configuration file of a target daughter card, wherein the configuration file is pre-configured and comprises parameter information required for an initialization process of the target daughter card;
parsing the configuration file, and acquiring, from the configuration file, initialization parameter information of the target daughter card; and
initializing the target daughter card according to a general daughter card initialization process and the initialization parameter information.

2. The daughter card initialization method according to claim 1, wherein the initialization parameter information comprises any one or any combination of a type of a daughter card interface, performance of the daughter card interface, and hardware configuration parameters; and
wherein the general daughter card initialization process comprises:
creating a corresponding port for the daughter card according to the type of the daughter card interface;
setting corresponding attributes for the port created according to the performance of the daughter card interface; and
setting hardware configuration parameters for the daughter card according to the hardware configuration parameters.

3. The daughter card initialization method according to claim 1, wherein acquiring the configuration file of a target daughter card comprises:
downloading an updated configuration file of the target daughter card; and
wherein initializing the target daughter card according to the general daughter card initialization process and the initialization parameter information comprises:
updating corresponding attribute parameters for the target daughter card according to the general daughter card initialization process and the initialization parameter information acquired from the updated configuration file.

4. The daughter card initialization method according to claim 3, wherein the updated configuration file comprises updated hardware configuration parameters of the target daughter card; and
wherein updating corresponding attribute parameters for the target daughter card according to the general daughter card initialization process and the initialization parameter information acquired from the updated configuration file comprises:
modifying the hardware configuration parameters according to the general daughter card initialization process and the updated hardware configuration parameters of the target daughter card.

5. The daughter card initialization method according to claim 3, wherein the method is applied to a router which comprises a main control module and a daughter card management module communicatively connected to the main control module;
wherein downloading the updated configuration file of the target daughter card comprises:
receiving, by the main control module, a request for updating the configuration file and notifying the daughter card management module of downloading the updated configuration file; and
wherein parsing the configuration file, and acquiring, from the configuration file, the initialization parameter information of the target daughter card comprises:
parsing, by the daughter card management module, the updated configuration file, replacing old-version initialization parameter information with updated initialization parameter information, and performing saving according to a slot number corresponding to the target daughter card.

6. The daughter card initialization method according to claim 1, wherein after initializing the target daughter card according to the general daughter card initialization process and the initialization parameter information, the method further comprises:
triggering initialization of a target chip,
wherein the target chip corresponds to a configuration file, and the configuration file corresponding to the target chip includes parameter information required for an initialization process of the target chip; and
wherein the initialization of the target chip comprises: initializing the target chip according to a general chip initialization process and the chip initialization parameter information included in the configuration file corresponding to the target chip.

7. The daughter card initialization method according to claim 6, wherein the target chip comprises a forwarding chip and a switching chip; and
wherein triggering the initialization of the target chip comprises:
triggering initialization of the forwarding chip; and
triggering an initialization process of the switching chip after the initialization of the forwarding chip is completed.

8. The daughter card initialization method according to any of claims 1 to 7, wherein the configuration file is pre-compiled in an XML file format or an EXCEL file format.

9. An electronic apparatus, comprising:
at least one processor; and
a memory communicatively connected to the at least one processor,
wherein the memory stores an instruction executable by the at least one processor, and the instruction is executed by the at least one processor so as to enable the at least one processor to implement the daughter card initialization method according to any of claims 1 to 8.

10. A storage medium, which stores a computer program, wherein the computer program, when executed by a processor, implements the daughter card initialization method according to any of claims 1 to 8.
